# EUROPÄISCHE PATENTSCHRIFT

(11) **EP 0 884 355 B1**
(45) Veröffentlichungstag und Bekanntmachung des Hinweises auf die Patenterteilung: **17.07.2002**
(21) Anmeldenummer: 98109495.6
(22) Anmeldetag: 26.05.1998
(51) Int. Cl.: C08L 23/10, C08J 9/00

(54) **Feinzellige Polyolefinschaumstoffe**
Polyolefin foams with fine cells
Mousses de polyolefines à cellules fines

(30) Priorität: 10.06.1997 DE 19724312
(43) Veröffentlichungstag der Anmeldung: 16.12.1998
(73) Patentinhaber: Borealis GmbH, 2323 Schwechat-Mannswörth (AT)
(72) Erfinder: Rätzsch, Manfred, Prof. Dr., 4202 Kirchschlag (AT); Bucka, Hartmut, Dipl.-Ing., * (AT); Panzer, Ulf, Dr., 4320 Perg (AT); Hesse, Achim, Dr., 4021 Linz (AT); Reichelt, Norbert, Dr., 4501 Neuhofen (AT); Leistner, Dirk, Dr., 1050 Wien (AT)
(74) Vertreter: Schinke, Herbert, Dr. Dr., Patentanwaltskanzlei

(56) Entgegenhaltungen:
- EP-A- 0 686 664
- DD-A- 135 621
- DE-C- 19 607 430
- PATENT ABSTRACTS OF JAPAN vol. 015, no. 297 (C-0854), 29. Juli 1991 & JP 03 109444 A (HITACHI CHEM CO LTD), 9. Mai 1991

## Beschreibung

Die Erfindung betrifft feinzellige Polyolefinschaumstoffe, die für den Einsatz auf dem Verpackungssektor, für Kraftfahrzeug -Teile sowie für Bauteile von Elektro- und Elektronikgeräten geeignet sind.

Die Herstellung von nichtvemetzten Polyethylenschäumen aus Hochdruckpolyethylen als Polyethylenextrusionsschäume (WO 87 04445) oder Polyethylenpartikelschäume nach dem Extrusionsverfahren ( EP 0 505 850) bzw. nach dem Suspensionsimprägnierverfahren ( EP 0 212 204) ist bekannt. Die im Hochdruckpolyethylen enthaltenen Langkettenverzweigungen bewirken eine hohe Schmelzefestigkeit des Polyethylens und dadurch eine hohe Stabilität der Schmelze im Verschäumungsschritt.

Der Nachteil von Polyethylenschäumen besteht in der geringen Wärmeformbeständigkeit und der geringen Steifigkeit. Polypropylenschäume besitzen gegenüber Polyethylenschäumen eine höhere Wärmeformbeständigkeit und Steifigkeit, die Verarbeitung von Polypropylenen zu Polypropylenschäumen erfordert jedoch infolge der geringen Schmelzefestigkeit des linearen Polypropylens aufwendige technologische Maßnahmen oder eine Modifizierung des Polypropylens. Eine Verarbeitung von Standard-Polypropylenen auf üblichen Polyethylen-Schaumextrudem ist nicht möglich.

Bei der Herstellung von Extrusionsschäumen muß bei Einsatz von Standard-Polypropylenen, CO₂ als Treibmittel und Nukleierungsmitteln der Schaumfolienabzug durch spezielle auf 95°C temperierte Abzugsrollen erfolgen (Dey, S., SPE-ANTEC 1996, 1955-1958).

Die Erzielung einer gleichmäßigen Zellstruktur von Partikelschäumen beim Suspensionsimprägnierverfahren unter Einsatz nichtmodifizierter Polypropylene erfordert aufwendige technologische Maßnahmen wie Begasung des Reaktorinhalts am Reaktorboden beim Ausfahrvorgang (unterhalb des Rührers bzw. durch den Rührer) (EP 0 630 935) oder Zugabe einer Heizflüssigkeit während des Entleerens des Autoklavs, bis 3/4 der Partikelschaummenge ausgelassen ist (EP 0 290 943). Ein weiteres Problem bei Partikelschäumen, die aus nichtmodifizierten Polypropylenen unter Einsatz von Butan als Treibmittel hergestellt wurden, besteht in der starken Schrumpfung. Durch eine aufwendige Behandlung der geschrumpften Partikel bei T< 20grd unterhalb der Erweichungstemperatur unter Druckbeaufschlagung mit Luft oder Inertgas kann eine Rückgängigmachung der Schrumpfung erzielt werden (EP 0 687 709).

Bekannt ist weiterhin, Polypropylen durch Einsatz von Polypropylen-Blends und von modifizierten Polypropylenen auf normalen Polyethylen-Standard-Schaumextrudern zu Extrusionsschäumen und Extrusionspartikelschäumen verarbeitbar zu machen.

Bekannte Blendkomponenten für Polypropylen bei der Extrusionsschaumherstellung auf normalen Polyethylen - Standard-Schaumextrudem sind Polyethylen (GB 20 99 434), EVA (GB 20 99 434), Butylkautschuk (EP 0 570 221), Styren-Butadien-Kautschuk (US 44 67 052) sowie (Meth)acrylat-Copolymere (US 55 06 307). Diese nichtgekoppelten Blendkomponenten führen jedoch zu einem starken Abfall der Wärmeformbeständigkeit, der Steifigkeit und der Druckfestigkeit der Polypropylenschäume.

Bekannte modifizierte Polypropylene, die zur Herstellung von Extrusionsschäumen und Extrusionspartikelschäumen geeignet sind, sind durch polymerisationsfähige Peroxide modifiziertes Polypropylen (WO 94 05 707) und durch Hochenergie-Elektronenbestrahlung modifiziertes Polypropylen (EP 0 190 889, De Nicola, A., Polymeric Materials Science and Engineering (1995), 106-108).

Der Nachteil des Verfahrens zur Modifizierung von Polypropylen durch Hochenergie-Elektronenbestrahlung besteht in dem sehr hohen sicherheitstechnischen Aufwand für die biologische Abschirmung der hochenergetischen Strahlung, der eine aufwendige Hermetisierung der Bestrahlungskammer durch dicke Spezialbetonwände oder Bleisegmentkonstruktionen, eine aufwendige Strahlenschutzmeßtechnik sowie eine medizinische Überwachung des Bedienpersonals erforderlich macht.

Die Aufgabe der vorliegenden Erfindung bestand in der Entwicklung feinzelliger Polyolefinschaumstoffe hoher Wärmeformbeständigkeit und Steifigkeit mit Schaumdichten im Bereich von 10 bis 600 kg/m³, bei denen die Nachteile bekannter Schaumstoffrezepturen vermieden werden.

Die erfindungsgemäße Aufgabe wurde durch Polyolefinschaumstoffe unter Einsatz von Mischungen aus 10 bis 90 Gew.%, bevorzugt 60 bis 80 Gew.%, an Polypropylenen und 90 bis 10 Gew.%, bevorzugt 40 bis 20 Gew.%, an Polyethylenen , die in zwei reaktiven Prozeßstufen und einer Verschäumungsstufe verarbeitet werden, gelöst.

In der ersten reaktiven Prozeßstufe erfolgt eine Vorreaktion, bei der die Mischungen aus Polypropylen und Polyethylen entweder in fester Phase oder in einer Übergangsphase Festphase/ Schmelze mit 0,05 bis 2 Masse% bifunktionell ethylenisch ungesättigten Monomeren und/oder mit 0,1 bis 5 Masse% , jeweils bezogen auf die eingesetzten Polyolefine, hydrolysierbaren ethylenisch ungesättigten Organosilanverbindungen in Gegenwart thermisch zerfallender Radikalbildner partiell zur Umsetzung gebracht werden.
Bei Durchführung der ersten reaktiven Prozeßstufe in fester Phase werden pulverförmige Polypropylen-Polyethylen-Mischungen mit den bifunktionell ethylenisch ungesättigten Monomeren und/oder hydrolysierbaren ethylenisch ungesättigten Organosilanverbindungen bei Reaktionstemperaturen von 55 bis 105°C in kontinuierlichen Schneckenmischern in Gegenwart von 0,01 bis 0,85 Masse%, bezogen auf die eingesetzten Polyolefine, an thermisch zerfallenden Radikalbildnern auf Basis von Acylperoxiden, Alkylperoxiden, Hydroperoxiden und/oder Perestern , die eine Halbwertszeit von 0,2 bis 5 Min. bei Reaktionstemperatur besitzen, partiell umgesetzt.
Bei Durchführung der ersten reaktiven Prozeßstufe in der Prozeßvariante Übergangsphase Festphase/ Schmelze erfolgt die partielle Umsetzung der Polypropylen-Polyethylen-Mischungen mit den bifunktionell ethylenisch ungesättigten Monomeren und/oder hydrolysierbaren ethylenisch ungesättigten Organosilanverbindungen bei Reaktionstemperaturen von 105 bis 190°C in Doppelschneckenextrudem in Gegenwart von 0,01 bis 0,85 Masse%, bezogen auf die eingesetzten Polyolefine, an thermisch zerfallenden Radikalbildnern auf Basis von Acylperoxiden, Alkylperoxiden, Hydroperoxiden, Peroxycarbonaten, Perestern, Ketonperoxiden, Peroxiketalen und/oder Azoverbindungen, die eine Halbwertszeit von 0,2 bis 2 Min. bei Reaktionstemperatur besitzen.

Nach Abschluß der ersten reaktiven Prozeßstufe sind im Reaktionsgemisch 5 bis 35 Masse% der eingesetzten bifunktionell ethylenisch ungesättigten Monomeren und/oder hydrolysierbaren ethylenisch ungesättigten Organosilanverbindungen und 10 bis 40 Masse% der eingesetzten thermisch zerfallenden Radikalbildner unverändert enthalten.

In der zweiten reaktiven Prozeßstufe erfolgt in einem Doppelschneckenextruder durch Einstellung einer Reaktionstemperatur des Reaktionsgemischs im Bereich von 195 bis 270°C unter Zusatz von 0,3 bis 8 Masse% an Treibmitteln und gegebenenfalls von 0,01 bis 0,35 Masse%, jeweils bezogen auf die eingesetzten Polyolefine, an Peroxiden, eine Kopplung der im Reaktionsgemisch enthaltenen, nicht umgesetzten Reaktanden.

Das Reaktionsgemisch wird in an sich bekannter Weise unter Aufschäumung aus dem Extruder ausgetragen und als geschäumtes Halbzeug in Form von Folien, Rohren oder Profilen abgezogen oder als geschäumter Strang ausgetragen und unmittelbar in Partikelschaumsegmente geschnitten.

Vor bzw. während der ersten und/oder zweiten reaktiven Prozeßstufe können gegebenenfalls 0,01 bis 1% Nukleierungsmittel, 0,01 bis 2,5 Masse% Stabilisatoren, 0,1 bis 1 Masse% Antistatika, 0,2 bis 3 Masse% Pigmente, 5 bis 40 Masse% Füll- und/oder Verstärkerstoffe , 2 bis 20 Masse% Flammschutzmittel, 0,1 bis 5 Masse% Silanolkondensationskatalysatoren und/oder 0,01 bis 5 Masse% Verarbeitungshilfsmittel, jeweils bezogen auf das eingesetzte Gemisch aus Polypropylenen und Polyethylenen, zugesetzt werden.

Bevorzugt geeignete Polypropylene für die Herstellung der feinzelligen Polyolefinschaumstoffe hoher Wärmeformbeständigkeit und Steifigkeit sind Propylen-Homopolymere und/oder Copolymere aus Propylen mit α-Olefinen mit 2 bis 18 C-Atomen sowie aus Mischungen der genannten Polypropylene, die als Pulver, Granulate oder Grieße mit einer bevorzugten Korngröße im Bereich von 0,001 bis 7 mm, besonders bevorzugt bei 0,05 bis 4 mm, eingesetzt werden.

Als Polyethylene sind für die Herstellung der feinzelligen Polyolefinschaumstoffe hoher Wärmeformbeständigkeit und Steifigkeit erfindungsgemäß insbesondere HDPE-, LDPE-, LLDPE sowie ULDPE-Typen sowie Copolymere aus Ethylen mit α-Olefinen mit 3 bis 18 C-Atomen oder Copolymere aus Ethylen, ungesättigten Estern und/oder ungesättigten Carbonsäuren sowie Mischungen der genannten Polyethylene geeignet, wobei die Polyethylene bevorzugt als Pulver, Granulate oder Grieße mit einer Komgröße im Bereich von 0,001 bis 7 mm, besonders bevorzugt bei 0,05 bis 4 mm, eingesetzt werden.

Besonders vorteilhaft erweist es sich, direkt aus der Polymerisationsanlage kommende Polypropylene und Polyethylene einzusetzen.

Geeignete bifunktionell ethylenisch ungesättigte Monomere, die eifindungsgemäß bei der Herstellung der feinzelligen Polyolefinschaumstoffe eingesetzt werden, sind:
- Diacrylate oder Dimethacrylate wie Ethylenglycoldiacrylat oder Diglycoldimethacrylat,
- Polyacrylate oder Polymethacrylate wie Glycerintriacrylat oder Pentaerythrittetramethacrylat,
- Diallylverbindungen wie Diallylcyanurat, Diallylphthalat oder Diallylmaleinat,
- Triallylverbindungen wie Triallylcitrat, Triallylcyanurat oder Triallylisocyanurat
- Makromere auf Basis von Oligobutadienen, Polysiloxanen und/oder Polyethern mit Acryl-, Allyl-, Isocyanat-, Oxazolin- oder Vinylendgruppen.

Bevorzugt geeignete bifunktionell ethylenisch ungesättigte Monomere sind :
- C₄- bis C₁₀- Diene wie Butadien, Butadien-1-carbonsäure, Chloropren, Cyclohexadien-1,3, Cyclohexadien-1,5, Cyclopentadien, 2,3-Dimethylbutadien, 1-Ethoxybutadien, 1,4-Heptadien, 1,4-Hexadien, 1,6-Hexadien, Isopren, Norbornadien, und/oder 1,4-Pentadien,
- C₅- bis C₉- Allylverbindungen wie Allylacrylat, Allylmethacrylat, Allylmethylmaleat und/oder Allylvinylether
- C₇- bis C₁₀- Divinylverbindungen wie Divinylanilin, m-Divinylbenzen, p-Divinylbenzen, Diethylenglycoldivinylether, Divinylpentan und/oder Divinylpropan.

Besonders bevorzugte bifunktionell ethylenisch ungesättigte Monomere sind Butadien, Isopren, Dimethylbutadien, Allylacrylat und/oder Divinylbenzen.

Mit Vorteil werden ebenfalls Mischungen dieser bifunktionell ethylenisch ungesättigten Monomeren eingesetzt.

Geeignete hydrolysierbare ethylenisch ungesättigte Silanverbindungen, die in der ersten reaktiven Prozeßstufe bei der Herstellung feinzelliger Polyolefinschaumstoffe hoher Wärmeformbeständigkeit und Steifigkeit eingesetzt werden, sind :
- Alkenylalkoxysilane wie Allyltriethoxysilan oder Allyltrimethoxysilan,
- Alkenylhalogensilane wie Allylmethyldichlorsilan oder Allyltrichlorsilan,
- Aminoalkenylsilane wie Aminobutenyltriethoxysilan,
- Aminovinylsilane wie Aminoethyldiethoxyvinylsilan
- Cycloalkenylsilane wie Cyclohexenyltriethoxysilan oder Triethoxysilylbicyclohepten,
- Styrylalkoxysilane wie Styrylethyltrimethoxysilan oder Trimethoxysilylstyren,
- Vinylhalogensilane wie Vinylethyldichlorsilan oder Vinylmethyldichlorsilan,
- Vinylcarboxysilane wie Vinylmethyldiacetoxysilan oder Vinyltriacetoxysilan.

Bevorzugt geeignete hydrolysierbare ethylenisch ungesättigte Silanverbindungen sind :
- Methacryloxyalkylsilane wie Methacryloxypropyltrimethoxysilan, Methacryloxypropyldimethylethoxysilan, Methacryloxypropylmethyldiethoxysilan, Methacryloxypropyltriethoxysilan, Methacryloxypropyltrismethoxyethoxysilan, Trimethylsiloxyethylmethacrylat und/oder Methacryloxypropyldimethylchlorsilan,
- Vinylalkoxysilane wie Vinyltributoxysilan, Vinyltriethoxysilan, Vinyltriisopropoxysilan, Vinyltrimethoxysilan, Vinyltrismethoxyethoxysilan, Vinyltristrimethoxysiloxysilan, Vinyldimethylethoxysilan, Vinyldimethylmethoxysilan, Vinylethyldiethoxysilan, Vinylmethyidiethoxysilan, Phenylvinyltrimethoxysilan, Diphenylvinylethoxysilan, Vinylphenyldiethoxysilan, Vinylphenyldimethoxysilan und/oder Vinylphenylmethylmethoxysilan.

Besonders bevorzugt sind Vinyltrimethoxysilan, Vinyltriethoxysilan und/oder Methacrylisopropyltrimethoxysilan.

Mit Vorteil werden ebenfalls Mischungen dieser hydrolysierbaren ethylenisch ungesättigten Silanverbindungen eingesetzt.

Erfindungsgemäß werden die feinzelligen Polyolefinschaumstoffe hoher Wärmeformbeständigkeit und Steifigkeit mit Schaumdichten im Bereich von 10 bis 600 kg/m³ aus Polypropylenen und Polyethylenen nach einem Verfahren hergestellt, bei dem Mischungen aus 10 bis 90 Gew.%, bevorzugt 60 bis 80 Gew.%, an Polypropylenen und 90 bis 10 Gew.%, bevorzugt 40 bis 20 Gew.%, an Polyethylenen in zwei reaktiven Prozeßstufen und einer Verschäumungsstufe verarbeitet werden.

In der ersten reaktiven Prozeßstufe a) erfolgt eine Vorreaktion, bei der
- entweder die pulverförmige Polypropylen-Polyethylen-Mischung in fester Phase bei Reaktionstemperaturen von 55 bis 105°C in kontinuierlichen Schneckenmischern mit mit 0,05 bis 2 Masse% an bifunktionell ungesättigten Monomeren und/oder 0,1 bis 5 Masse% hydrolysierbaren ethylenisch ungesättigten Organosilanverbindungen in Gegenwart von 0,01 bis 0,85 Masse%, jeweils bezogen auf die eingesetzten Polyolefine, an thermisch zerfallenden Radikalbildnern auf Basis von Acylperoxiden, Alkylperoxiden, Hydroperoxiden und/oder Perestern, die eine Halbwertszeit von 0,2 bis 5 Min. bei Reaktionstemperatur besitzen, partiell umgesetzt wird,
oder die Polypropylen-Polyethylen-Mischung in einer Übergangsphase Festphase/Schmelze bei Reaktionstemperaturen von 105 bis 190°C in Doppelschneckenextrudern mit bifunktionell ungesättigten Monomeren und/oder hydrolysierbaren ethylenisch ungesättigten Organosilanverbindungen in Gegenwart von 0,01 bis 0,85 Masse%, bezogen auf die eingesetzten Polyolefine, an thermisch zerfallenden Radikalbildnem auf Basis von Acylperoxiden, Alkylperoxiden, Hydroperoxiden, Peroxycarbonaten, Perestern, Ketonperoxiden, Peroxiketalen und/oder Azoverbindungen, die eine Halbwertszeit von 0,2 bis 2 Min. bei Reaktionstemperatur besitzen, partiell umgesetzt wird,
und nach der im Reaktionsgemisch 5 bis 35 Masse% der eingesetzten bifunktionell ethylenisch ungesättigten Monomeren und/oder hydrolysierbaren ethylenisch ungesättigten Organosilanverbindungen und 10 bis 40 Masse% der eingesetzten thermisch zerfallenden Radikalbildner unverändert enthalten sind.

In der zweiten reaktiven Prozeßstufe b) erfolgt in einem Doppelschneckenextruder durch Einstellung einer Reaktionstemperatur des Reaktionsgemischs im Bereich von 195 bis 270°C und unter Zusatz von 0,3 bis 8 Masse an Treibmitteln und gegebenenfalls von 0,01 bis 0,35 Masse%, jeweils bezogen auf die eingesetzten Polyolefine, an Peroxiden, eine Kopplung der im Reaktionsgemisch enthaltenen, nicht umgesetzten Reaktanden.

In der Verschäumungsstufe c) wird das Reaktionsgemisch in an sich bekannter Weise unter Aufschäumung aus dem Extruder ausgetragen und als geschäumtes Halbzeug in Form von Folien, Rohren oder Profilen abgezogen oder als geschäumter Strang ausgetragen und unmittelbar in Partikelschaumsegmente geschnitten.

Vor bzw. während der ersten und/oder zweiten reaktiven Prozeßstufe können gegebenenfalls 0,01 bis 1% Nukleierungsmittel, 0,01 bis 2,5 Masse% Stabilisatoren, 0,1 bis 1 Masse% Antistatika, 0,2 bis 3 Masse% Pigmente, 5 bis 40 Masse% Füll- und/oder Verstärkerstoffe , 2 bis 20 Masse% Flammschutzmittel, 0,1 bis 5 Masse% Silanolkondensationskatalysatoren und/oder 0,01 bis 5 Masse% Verarbeitungshilfsmittel, jeweils bezogen auf das eingesetzte Gemisch aus Polypropylen und Polyethylen, zugesetzt werden.

Bei der Festphasenvariante der ersten reaktiven Prozeßstufe und Einsatz von leichtflüchtigen ethylenisch ungesättigten bifunktionellen Monomeren ist es vorteilhaft, die Monomeren durch Sorption aus Gasphase auf das F'olyolefingemisch aufzubringen.

Bei dem erfindungsgemäßen Verfahren sind als thermisch zerfallende Radikalbildner in der ersten reaktiven Prozeßstufe bei der Vorreaktion in fester Phase geeignet:
- Acylperoxide wie Acetylbenzoylperoxid, Benzoylperoxid, 4-Chlorbenzoylperoxid, Dinitrobenzoylperoxid, 3-Methoxybenzoylperoxid und/oder Methylbenzoylperoxid;
- Alkylperoxide wie Allyl-tert.butylperoxid, 2,2-Bis-(tert.butylperoxybutan), 1,1-Bis-(tert.butylperoxi-)-3,3,5-trimethylcyclohexan, Diisopropylaminomethyltert.amylperoxid, Dimethylaminomethyl-tert.amylperoxid, Diethylaminomethyl-tert.butylperoxid, Dimethylaminomethyl-tert.butylperoxid, 1.1 -Di-(tert.amylperoxi)-cyclohexan, tert. Amylperoxid, tert.Butylcumylperoxid, tert.Butylperoxid und/oder 1-Hydroxybutyl-n-butylperoxid;
- Hydroperoxide wie Decalinhydroperoxid und/oder Tetralinhydroperoxid;
- Perester und Peroxicarbonate wie Butylperacetat, Cumylperacetat, Cumylperpropionat, Cyclohexylperacetat, Di-tert.butylperadipat, Di-tert.butylperazelat, Di-tert.butylperglutarat, Di-tert.butylperphthalat, Di-tert.butylpersebazat, 4-Nitrocumylperpropionat, 1-Phenylethylperbenzoat, Phenylethylnitroperbenzoat, tert.Butylbicyclo-(2,2,1)heptanpercarboxylat, tert.Butyl-4-carbomethoxyperbutyrat, tert.Butylcyclobutanpercarboxylat, tert.Butylcyclohexylperoxycarboxylat, tert.Butylcyclopentylpercarboxylat, tert.Butylcyclopropanpercarboxylat, tert.Butyldimethylpercinnamat, tert.Butyl-2-(2,2-diphenylvinyl)-perbenzoat, tert.Butyl-4-methoxypeirbenzoat, tert.Butylperbenzoat, tert.Butylcarboxicyclohexan, tert.Butylpernaphthoat, tert.Butylperoxiisopropylcarbonat, tert.Butylpertoluat, tert. Butyl-1-phenylcyclopropylpercarboxylat, tert. Butyl-2-propylperpenten-2-oat, tert. Butyl-1-methylcypropylpercarboxylat, tert.Butyl-4-nitrophenylperacetat, tert.Butylnitrophenylperoxycarbamat, tert. Butyl-N-succinimidopercarboxylat, tert.Butylpercrotonat, tert.Butylpermaleinsäure, tert.Butylpermethacrylat, tert.Butylperoctoat, tert.Butylperoxyisopropylcarbonat, tert.Butylperisobutyrat, tert.Butylperacrylat und/oder tert.Butylperpropionat.

Mit Vorteil werden ebenfalls Gemische dieser Radikalbildner eingesetzt.

Für die Auswahl entsprechend den spezifischen Reaktionsbedingungen können die Halbwertszeiten der Radikalbildner bei der entsprechenden Reaktionstemperatur aus Tabellenwerken direkt entnommen werden oder aus den in Tabellenwerken wie Polymer Handbook., 3rd Edition, J.Wiley & Sons, 1989, II/1, aufgeführten Radikalbildnerzerfallskonstanten und Aktivierungsenergien des Radikalbildnerzerfalls berechnet werden.

Für die Vorreaktion in der Übergangsphase Festphase/Schmelze sind als thermisch zerfallende Radikalbildner in der ersten reaktiven Prozeßstufe darüber hinaus geeignet:
- Ketonperoxide wie Methylethylketonhydroperoxid;
- Peroxiketale wie 1.1-Di-tert.butylperoxy-3,3,5-trimethylcyclohexan;
- Azoverbindungen wie 2-Cyano-2-propylazoformamid, 2,2'-Azo-bis-2-methylpropionitril, 1,1'-Azo-bis-cyclopentannitril, 1,1'-Azo.bis-cyclohexannitril, 2,2'-Azo-bis-cyclohexylpropionitril; 2,2'-Azo-bis-methyl-2-methylpropionat, Azo-bis-(N,N'-diethylenisobutyramidin), 1,1'-Azo-bis-1-phenylethan und/oder 1,1'-Azo-bis-1-phenylpropan;

Bevorzugt geeignete Treibmittel, die bei der Herstellung der feinzelligen Polyolefinschaumstoffe in der zweiten reaktiven Prozeßstufe eingesetzt werden, sind:
- gasabspaltende Treibmittel wie Natriumhydrogencarbonat, Azodicarbonamid und/oder Cyanursäuretrihydrazid,
- leichtflüchtige Kohlenwasserstoffe wie Pentan, Isopentan und/oder Isobutan,
- Halogenkohlenwasserstoffe wie Monofluortrichlormethan und/oder Difluormonochlormethan
- Gase wie Stickstoff, Argon und/oder Kohlendioxid

Die bei dem erfindungsgemäßen Verfahren in der zweiten reaktiven Prozeßstufe gegebenenfalls zusätzlich eingesetzten thermisch zerfallenden Radikalbildner entsprechen den Radikalbildnern, die in der ersten reaktiven Prozeßstufe bei der Prozeßvariante Übergangsphase Festphase/ Schmelze eingesetzt werden.

Beispiele für Nukleierungsmittel, die bei dem erfindungsgemäßen Verfahren zur Herstellung der feinzelligen Polyolefinschaumstoffe vor bzw. während der ersten und/oder zweiten reaktiven Prozeßstufe gegebenenfalls der Reaktionsmischung hinzugefügt werden können, sind α-Nukleierungsmittel wie Talkum oder Natriumbenzoat oder β-Nukleierungsmittel wie Natriumpimelat, Calciumpimelat und/oder Chinacridinonchinon.

Als Stabilisatoren werden bei dem erfindungsgemäßen Verfahren .bevorzugt Mischungen aus 0,01 bis 0,6 Masse% phenolischen Antioxidantien, 0,01 bis 0,6 Masse% 3-Arylbenzofuranone, 0,01 bis 0,6 Masse% Verarbeitungsstabilisatoren auf Basis von Phosphiten , 0,01 bis 0,6 Masse% Hochtemperaturstabilisatoren auf Basis von Disulfiden und Thioäthern und/oder 0,01 bis 0,8 Masse% sterisch gehinderten Aminen (HALS) eingesetzt .

Geeignete phenolische Antioxidantien sind 2-tert.Butyl-4,6-dimethylphenol, 2,6-Di-tert.butyl-4-methylphenol, 2,6-Di-tert.butyl-4-isoamylphenol, 2,6,-Di-tert.butyl-4-ethylphenol, 2-tert.Butyl-4,6-diisopropylphenol, 2,6-Dicyclopentyl-4-methylphenol, 2,6-Di-tert.-butyl-4-methoxymethylphenol, 2-tert.Butyl-4,6-dioctadecylphenol, 2,5-Di-tert.butylhydrochinon, 2,6-Di-tert.butyl-4,4-hexadecyloxyphenol, 2,2'-Methylen-bis(6-tert.butyl-4-methylphenol), 4,4'-Thio-bis-(6-tert.butyl-2-methylphenol), 3(3,5-Di-tert.butyl - 4 - hydroxyphenyl)propionsäureoctadecylester, 1,3,5-Trimethyl - 2,4,6-tris(3',5'di-tert.butyl-4-hydroxybenzyl)benzen und/oder Pentaerythritol-tetrakis[3-(3,5-di-tert.butyl-4-hydroxyphenyl)]propionat.

Als Benzofuranonderivat ist insbesondere 5,7-Di-tert.butyl-3-(3,4-di-methylphenyl)-3H-benzofuran-2-on geeignet.

Als HALS-Verbindungen sind Bis-2,2,6,6-tetramethyl-4-piperidylsebazat und/oder Poly - ([1,1,3,3,-tetramethylbutyl)-imino]-1,3,5- triazin - 2,4,diyl)[2,2,6,6-tetramethylpiperidyl)-amino]-hexamethylen-4-(2,2,6,6-tetra-methyl)piperidyl)-imino] besonders geeignet.

Als Silanolkondensationskatalysator wird bei dem erfindungsgemäßen Verfahren bevorzugt Dibutylzinndilaurat eingesetzt.

Als Verarbeitungshilfsmittel können Calciumstearat, Magnesiumstearat und/oder Wachse eingesetzt werden.

Erfindungsgemäß werden die feinzelligen Polyolefinschaumstoffe hoher Wärmeformbeständigkeit und Steifigkeit bevorzugt auf dem Verpackungssektor, in der Fahrzeugindustrie sowie für Bauteile von Elektro- und Elektronikgeräten angewandt.

Beispiele für Anwendungen auf dem Verpackungssektor sind Industrieverpackungen für elektronische Geräte und Haushaltsgeräte sowie tiefgezogene Lebensmittelverpackungen.

Anwendungsbeispiele in der Fahrzeugindustrie sind Kraftfahrzeug-Außenteile wie Kemmaterial für Stoßfänger und Kantenschutz für Hohltüren sowie Kraftfahrzeug-Innenraumteile wie Motorrauminnenauskleidungen, Kopfstützen, Sonnenblenden, Armstützen, Kniepolster, Türverkleidungen, Dachverkleidungen und Gehäuse von Heizarmaturen.

Die Erfindung wird durch nachfolgende Beispiele erläutert:

### Beispiel 1

Für die Herstellung eines Partikel-Extrusionsschaumes wird eine Mischung aus 75 Gew.% eines pulverförmigen statistischen Polypropylen-Copolymers (Schmelzindex 0,65 g/10 min bei 230°C/2,16 kp, Ethylengehalt 4,5 Gew.%, mittlere Korngröße 0,09 mm ) und 25 Gew.% eines HDPE - Homopolymers (Dichte 0,954 g/cm³, Schmelzindex 0,25 g/10 min bei 190°C/5 kp, mittlere Korngröße 0,15 mm) eingesetzt.

Die pulverförmige Mischung wird in der ersten reaktiven Prozeßstufe in einen kontinuierlichen Durchlaufmischer dosiert und mit 0,14 Gew.% Bis(tert.butylperoxy)-2,5-dimethylhexan und mit 0,1 Gew.% Calciumstearat (jeweils bezogen auf das Polyolefingemisch) bei 35°C homogenisiert. Anschließend wird das mit thermisch zerfallendem Radikalbildner und Hilfsstoff beladene Polyolefingemisch in einen kontinuierlichen Schneckenmischer überführt und bei einer Verweilzeit von 5 min bei 40°C durch die Butadien enthaltende Inertgasmischung mit 0,85 Gew.% Butadien, bezogen auf das Polypropylen-Homopolymer, sorptiv beladen und in einem zweiten kontinuierlichen Schneckenmischer bei 85°C und einer Verweilzeit von 5,5 Minuten partiell umgesetzt.

Eine vor Dosierung in den Doppelschneckenextruder entnommene Analysenprobe der ersten reaktiven Prozeßstufe ergab einen Gehalt an nichtumgesetztem Butadien von 0,35 Gew.% und einen Gehalt an nichtumgesetztem Peroxid von 0,05 Gew.%.

In der zweiten reaktiven Prozeßstufe wird das Reaktionsgemisch nach Dosierung in den Doppelschneckenextruder unter Zusatz von 1,3 Gew.% einer Mischung aus Natriumbicarbonat und Calciumpimelat als Nukleierungsmittel, 0,1 Masse% Tetrakis[methylen(3,5-di-tert.butylhydroxyhydrocinnamat)]methan und 0,1 Masse% Tris-(2,4-di-tert.butyl-phenyl)phosphit bei einer Massetemperatur von 225°C aufgeschmolzen, wobei 7,5 Gew.% eines Methylbutan-Gemischs als Treibmittel in die Kunststoffschmelze bei 185°C injiziert wird.

Die Schmelze wird bei einer Düsentemperatur von 140°C ausgetragen und der resultierende geschäumte Strang unmittelbar in Segmente geschnitten. Zur Erzielung des Druckausgleichs Zelleninnendruck/Umgebung werden die Schaumstoffpartikel 20 Std. bei Raumtemperatur gelagert.

Der Partikelschaum auf Basis der modifizierten Polypropylen-Polyethylen-Mischung wird nach dem "Steam-Chest-Molding"- Verfahren durch Blasen von überhitztem Wasserdampf durch die mit dem Partikelschaum gefüllte Form zu Rohrisolationsschalen für eine Einsatztemperatur bis 100°C mit einer Formteildichte von 90 kg/m³ verarbeitet. Ausgestanzte Prüfkörper besitzen eine Zugfestigkeit von 580 kPa und eine Wasseraufnahme von 1,10 Gew.% (23°C, 160 Std.).

### Beispiel 2

Für die Herstellung eines Extrusionsschaumes wird eine Mischung aus 90 Gew.% eines Polypropylen-Homopolymers (Schmelzindex von 0,2 g/10 min bei 230°C/2,16 kp) und 10 Gew.% eines LDPE - Copolymers (Dichte 0,920 g/cm³, Schmelzindex 0,15 g/10 min bei 190°C/2,16 kp, Gehalt an gebundenem Buten-1 3,2 Gew.%, mittlere Komgröße 3,5 mm) eingesetzt.

Die Polypropylen-Polyethylen-Mischung wird in einem Innenmischer mit 1,15 Gew.% Vinyltrimethoxysilan, 0,5 Gew.% Dibutylzinndilaurat, 0,05 Gew.% Hydrotalcit, 0,05 Gew.% Calciumstearat, 0,8 Gew.% Calciumpimelat, 0,1 Masse% Tetrakis[methylen(3,5-di-tert.butylhydroxyhydrocinnamat)]methan, 0,1 Masse% Tris-(2,4-di-tert.butylphenyl)phosphit und 0,45 Gew.% Di-tert.Butylperoxid (jeweils bezogen auf die Polyolefinmischung) homogenisiert und in einer ersten reaktiven Prozeßstufe in einem Doppelschneckenextruder bei einem Temperaturprofil 901110 /125/165/175/175°C in einer Übergangsphase Festphase/Schmelze bei einer Verweil-zeit von 2,5 min partiell umgesetzt .

Eine vor Dosierung in den zweiten Doppelschneckenextruder entnommene Analysenprobe der ersten reaktiven Prozeßstufe ergab einen Gehalt an nichtumgesetztem Vinyltrimethoxysilan von 0,25 Gew.% und einen Gehalt an nichtumgesetztem Peroxid von 0,08 Gew.%.

Die Reaktionsmischung wird in einen zweiten Doppelschneckenextruder überführt, wo in einer zweiten reaktiven Prozeßstufe durch Erhöhung der Schmelzetemperatur auf 235°C eine Kopplung der nichtumgesetzten Reaktanden erfolgt. Nach Eindosierung von 5,9 Gew.% (bezogen auf die Polyolefinmischung) eines Methylbutan-Gemischs als Treibmittel und Homogenisierung der Mischung wird die Schmelze über eine Ringdüse bei 165 °C ausgetragen und unter interner Luftkühlung als Schaumfolienschlauch abgezogen und aufgehaspelt.

Die resultierende Schaumfolie mit einer Dichte von 190 kg/m³ und einem Biegemodul von 12,5 x 10⁷ N/m² wird zur Herstellung von Tiefzieh-Lebensmittelverpackungen eingesetzt.

## Patentansprüche

1. Feinzellige Polyolefinschaumstoffe hoher Wärmeformbeständigkeit und Steifigkeit mit Schaumdichten im Bereich von 10 bis 600 kg/m³ aus Polypropylenen und Polyethylenen, **dadurch gekennzeichnet, daß** die Herstellung der Polyolefinschaumstoffe unter Einsatz von Mischungen aus 10 bis 90 Gew.%, bevorzugt 60 bis 80 Gew.%, an Polypropylenen und 90 bis 10 Gew.%, bevorzugt 40 bis 20 Gew.%, an Polyethylenen in zwei reaktiven Prozeßstufen und einer Verschäumungsstufe erfolgt ist, wobei
a) in der ersten reaktiven Prozeßstufe eine Vorreaktion erfolgt ist, bei der
entweder die pulverförmige Polypropylen-Polyethylen-Mischung in fester Phase bei Reaktionstemperaturen von 55 bis 105°C in kontinuierlichen Schneckenmischern mit 0,05 bis 2 Masse% an bifunktionell ethylenisch ungesättigten Monomeren und/oder 0,1 bis 5 Masse% an hydrolysierbaren ethylenisch ungesättigten Organosilanverbindungen in Gegenwart von 0,01 bis 0,85 Masse%, jeweils bezogen auf die eingesetzten Polyolefine, an thermisch zerfallenden Radikalbildnern auf Basis von Acylperoxiden, Alkylperoxiden, Hydroperoxiden und/oder Perestem, die eine Halbwertszeit von 0,2 bis 5 Min. bei Reaktionstemperatur besitzen, partiell umgesetzt wird,
oder die Polypropylen-Polyethylen-Mischung in einer Übergangsphase Festphase/Schmelze bei Reaktionstemperaturen von 105 bis 190°C in Doppelschneckenextrudem mit 0,05 bis 2 Masse% an bifunktionell ethylenisch ungesättigten Monomeren und/oder 0,1 bis 5 Masse% an hydrolysierbaren ethylenisch ungesättigten Organosilanverbindungen in Gegenwart von 0,01 bis 0,85 Masse%, jeweils bezogen auf die eingesetzten Polyolefine, an thermisch zerfallenden Radikalbildnern auf Basis von Acylperoxiden, Alkylperoxiden, Hydroperoxiden, Peroxycarbonaten, Perestern, Ketonperoxiden, Peroxiketalen und/oder Azoverbindungen, die eine Halbwertszeit von 0,2 bis 2 Min. bei Reaktionstemperatur besitzen, partiell umgesetzt wird,
und nach der im Reaktionsgemisch 5 bis 35 Masse% der eingesetzten bifunktionell ethylenisch ungesättigten Monomeren und/oder hydrolysierbaren ethylenisch ungesättigten Organosilanverbindungen und 10 bis 40 Masse% der eingesetzten thermisch zerfallenden Radikalbildner unverändert enthalten sind,
b) in der zweiten reaktiven Prozeßstufe in einem Doppelschneckenextruder durch Einstellung einer Reaktionstemperatur des Reaktionsgemischs im Bereich von 195 bis 270°C unter Zusatz von 0,3 bis 8 Masse% an Treibmitteln und gegebenenfalls von 0,01 bis 0,35 Masse%, jeweils bezogen auf die eingesetzten Polyolefine, an Peroxiden, eine Kopplung der im Reaktionsgemisch enthaltenen, nicht umgesetzten Reaktanden erfolgt ist, und
c) das Reaktionsgemisch in an sich bekannter Weise unter Aufschäumung aus dem Extruder ausgetragen und als geschäumtes Halbzeug in Form von Folien, Rohren oder Profilen abgezogen oder als geschäumter Strang ausgetragen und unmittelbar in Partikelschaumsegmente geschnitten worden ist,
und wobei vor bzw. während der ersten und/oder zweiten reaktiven Prozeßstufe gegebenenfalls 0,01 bis 1% Nukleierungsmittel, 0,01 bis 2,5 Masse% Stabilisatoren, 0,1 bis 1 Masse% Antistatika, 0,2 bis 3 Masse% Pigmente, 5 bis 40 Masse% Füll- und/oder Verstärkerstoffe, 2 bis 20 Masse% Flammschutzmittel, 0,1 bis 5 Masse% Silanolkondensationskatalysatoren und/oder 0,01 bis 5 Masse% Verarbeitungshilfsmittel, jeweils bezogen auf das eingesetzte Gemisch aus Polypropylen und Polyethylen, zugesetzt worden sind.

2. Feinzellige Polyolefinschaumstoffe hoher Wärmeformbeständigkeit und Steifigkeit nach Anspruch 1, **dadurch gekennzeichnet, daß** als Polypropylene Propylen-Homopolymere und/oder Copolymere aus Propylen mit α-Olefinen mit 2 bis 18 C-Atomen sowie Mischungen der genannten Polypropylene eingesetzt werden, wobei die Polypropylene als Pulver, Granulate oder Grieße mit einer Korngröße im Bereich von 0,001 bis 7 mm, bevorzugt bei 0,05 bis 4 mm, vorliegen.

3. Feinzellige Polyolefinschaumstoffe hoher Wärmeformbeständigkeit und Steifigkeit nach Anspruch 1 und 2, **dadurch gekennzeichnet, daß** als Polyethylene HDPE-, LDPE-, LLDPE sowie ULDPE-Typen sowie Copolymere aus Ethylen mit α-Olefinen mit 3 bis 18 C-Atomen oder Copolymere aus Ethylen, ungesättigten Estern und/oder ungesättigten Carbonsäuren sowie Mischungen der genannten Polyethylene eingesetzt werden, wobei die Polyethylene als Pulver, Granulate oder Grieße mit einer Korngröße im Bereich von 0,001 bis 7 mm, bevorzugt bei 0,05 bis 4 mm, vorliegen.

4. Feinzellige Polyolefinschaumstoffe hoher Wärmeformbeständigkeit und Steifigkeit nach Anspruch 1 bis 3, **dadurch gekennzeichnet, daß** die bifunktionell ethylenisch ungesättigten Monomere C₄- bis C₁₀- Diene, C₅- bis C₉- Allylverbindungen und/oder C₇- bis C₁₀- Divinylverbindungen, bevorzugt Butadien, Isopren, Dimethylbutadien, Allylacrylat und/oder Divinylbenzen, sind.

5. Feinzellige Polyolefinschaumstoffe hoher Wärmeformbeständigkeit und Steifigkeit nach Anspruch 1 bis 4, **dadurch gekennzeichnet, daß** die hydrolysierbaren ethylenisch ungesättigten Silanverbindungen Vinylalkoxysilane und/oder Methacryloxyalkylsilane, bevorzugt Vinyltrimethoxysilan, Vinyltriethoxysilan und/oder Methacrylisopropyltrimethoxysilan sind.

6. Verfahren zur Herstellung feinzelliger Polyolefinschaumstoffe hoher Wärmeformbeständigkeit und Steifigkeit mit Schaumdichten im Bereich von 10 bis 600 kg/m³ aus Polypropylenen und Polyethylenen, **dadurch gekennzeichnet, daß** die Herstellung der Polyolefinschaumstoffe unter Einsatz von Mischungen aus 10 bis 90 Gew.%, bevorzugt 60 bis.80 Gew.%, an Polypropylenen und 90 bis 10 Gew.%, bevorzugt 40 bis 20 Gew.%, an Polyethylenen in zwei reaktiven Prozeßstufen und einer Verschäumungsstufe erfolgt, wobei
a) in der ersten reaktiven Prozeßstufe eine Vorreaktion erfolgt, bei der
entweder die pulverförmige Polypropylen-Polyethylen-Mischung in fester Phase bei Reaktionstemperaturen von 55 bis 105°C in kontinuierlichen Schneckenmischern mit mit 0,05 bis 2 Masse% an bifunktionell ungesättigten Monomeren und/oder 0,1 bis 5 Masse% hydrolysierbaren ethylenisch ungesättigten Organosilanverbindungen in Gegenwart von 0,01 bis 0,85 Masse%, jeweils bezogen auf die eingesetzten Polyolefine, an thermisch zerfallenden Radikalbildnem auf Basis von Acylperoxiden, Alkylperoxiden, Hydroperoxiden und/oder Perestern, die eine Halbwertszeit von 0,2 bis 5 Min. bei Reaktionstemperatur besitzen, partiell umgesetzt wird,
oder die Polypropylen-Polyethylen-Mischung in einer Übergangsphase Festphase/Schmelze bei Reaktionstemperaturen von 105 bis 190°C in Doppelschneckenextrudem mit bifunktionell ungesättigten Monomeren und/oder hydrolysierbaren ethylenisch ungesättigten Organosilanverbindungen in Gegenwart von 0,01 bis 0,85 Masse%, bezogen auf die eingesetzten Polyolefine, an thermisch zerfallenden Radikalbildnern auf Basis von Acylperoxiden, Alkylperoxiden, Hydroperoxiden, Peroxycarbonaten, Perestern, Ketonperoxiden, Peroxiketalen und/oder Azoverbindungen, die eine Halbwertszeit von 0,2 bis 2 Min. bei Reaktionstemperatur besitzen, partiell umgesetzt wird,
und nach der im Reaktionsgemisch 5 bis 35 Masse% der eingesetzten bifunktionell ethylenisch ungesättigten Monomeren und/oder hydrolysierbaren ethylenisch ungesättigten Organosilanverbindungen und 10 bis 40 Masse% der eingesetzten thermisch zerfallenden Radikalbildner unverändert enthalten sind,
b) in der zweiten reaktiven Prozeßstufe in einem Doppelschneckenextruder durch Einstellung einer Reaktionstemperatur des Reaktionsgemischs im Bereich von 195 bis 270°C und unter Zusatz von 0,3 bis 8 Masse an Treibmitteln, und gegebenenfalls von 0,01 bis 0,35 Masse%, jeweils bezogen auf die eingesetzten Polyolefine, an Peroxiden, eine Kopplung der im Reaktionsgemisch enthaltenen, nicht umgesetzten Reaktanden erfolgt, und
c) das Reaktionsgemisch in an sich bekannter Weise unter Aufschäumung aus dem Extruder ausgetragen und als geschäumtes Halbzeug in Form von Folien, Rohren oder Profilen abgezogen wird oder als geschäumter Strang ausgetragen und unmittelbar in Partikelschaumsegmente geschnitten wird,
und wobei vor bzw. während der ersten und/oder zweiten reaktiven Prozeßstufe gegebenenfalls 0,01 bis 1% Nukleierungsmittel, 0,01 bis 2,5 Masse% Stabilisatoren, 0,1 bis 1 Masse% Antistatika, 0,2 bis 3 Masse% Pigmente, 5 bis 40 Masse% Füll- und/oder Verstärkerstoffe, 2 bis 20 Masse% Flammschutzmittel, 0,1 bis 5 Masse% Silanolkondensationskatalysatoren und/oder 0,01 bis 5 Masse% Verarbeitungshilfsmittel, jeweils bezogen auf das eingesetzte Gemisch aus Polypropylen und Polyethylen, zugesetzt werden.

7. Verfahren zur Herstellung feinzelliger Polyolefinschaumstoffe nach Anspruch 6, **dadurch gekennzeichnet, daß** als Treibmittel gasabspaltende Treibmittel, leichtflüchtige Kohlenwasserstoffe, leichtflüchtige Halogenkohlenwasserstoffe und/oder Gase eingesetzt werden.

8. Anwendung von feinzelligen Polyolefinschaumstoffen hoher Wärmeformbeständigkeit und Steifigkeit nach einem oder mehreren der Ansprüche 1 bis 5 auf dem Verpackungssektor, bevorzugt zur Lebensmittelverpackung, für Kraftfahrzeug-Außenteile und Kraftfahrzeug-Innenraumteile sowie für Bauteile von Elektro- und Elektronikgeräten.

## Claims

1. Polyolefin foams with fine cells made of polypropylenes and polyethylenes, showing high rigidity as well as dimensional stability under heat, with foam densities ranging from 10 kg/m³ up to 600 kg/m³, **characterized in that** these polyolefin foams are manufactured from mixtures comprising by weight 10 per cent to 90 per cent - preferably 60 per cent to 80 per cent - polypropylenes and 90 per cent to 10 per cent - preferably 40 per cent to 20 per cent - polyethylenes, that are subjected to two reactive process stages and one foaming stage, where
(a) a pre-reaction occurs in the first reactive process stage, under which
a partial transformation takes place that involves either the powdered polypropylene/polyethylene mixture in solid phase in continuous screw mixers at a reaction temperature from 55°C to 105°C, comprising by weight 0.05 per cent to 2 per cent of bifunctional unsaturated ethylenic monomers and/or 0.1 per cent to 5 per cent of hydrolyzable unsaturated ethylenic organosilane compounds in the presence of 0.01 per cent to 0.85 per cent - always meant to refer to the polyolefins input - of thermally-degrading, radical-forming agents based on acylperoxides, alkylperoxides, hydroperoxides and/or peresters, having a half-time of 0.2 minutes to 5 minutes at reaction temperature; or the polypropylene/polyethylene mixture in a solid-phase-melt transition state in twinscrew extruders at a reaction temperature from 105°C to 190°C, comprising by weight 0.05 per cent to 2 per cent of bifunctional unsaturated ethylenic monomers and/or 0.1 per cent to 5 per cent of hydrolyzable unsaturated ethylenic organosilane compounds in the presence of 0.01 per cent to 0.85 per cent - always meant to refer to the polyolefins input - of thermally-degrading, radical-forming agents based on acylperoxides, alkylperoxides, hydroperoxides, peroxycarbonates, peresters, kentone peroxides, peroxyketals and/or azo compounds, having a half-time of 0.2 minutes to 2 minutes at reaction temperature;
and after which the reaction mixture contains by weight 5 per cent to 35 per cent of the bifunctional unsaturated ethylenic monomers and/or hydrolyzable unsaturated ethylenic organosilane compounds input, and 10 per cent to 40 per cent of the thermally-degrading, radical-forming agents input, in unchanged form;
(b) in the second reactive process stage, which takes place in a twinscrew extruder, the non-transformed reactants contained in the reaction mixture undergo a coupling process by adjusting the temperature of the reaction mixture to be in the range from 195°C to 270°C, and adding by weight 0.3 per cent to 8 per cent of propellants and - if necessary - 0.01 per cent to 0.35 per cent of peroxides, always meant to refer to the polyolefins input; and
(c) the reaction mixture is discharged from the extruder and foamed in a well known manner, and drawn in form of semi-finished foam products such as films, pipes or sections, or discharged in form of a foamed billet that is immediately cut into particle-foam segments;
and where before, or during the first and/or the second reactive process stage, if needed, by weight 0.01 per cent to 1 per cent of nucleating agents, 0.01 per cent to 2.5 per cent of stabilizers, 0.1 per cent to 1 per cent of antistatic additive agents, 0.2 per cent to 3 per cent of pigments, 5 per cent to 40 per cent of filling and/or reinforcing agents, 2 per cent to 20 per cent of flameproofing agents, 0.01 per cent to 5 per cent of silanol condensation catalysts and/or 0.01 per cent to 5 per cent of processing aid additives are added, always meant to refer to the mixture of polypropylene and polyethylene input.

2. Polyolefin foams with fine cells showing high rigidity as well as dimensional stability under heat according to Claim 1, **characterized in that** the polypropylenes are added in form of propylene homopolymers and/or copolymers composed of propylene with α-olefins with 2 to 18 C atoms as well as mixtures of the said polypropylenes, and where the latter are in form of powders, granulates or coarse-grain materials, with grain sizes from 0.001mm to 7mm, preferably 0.05mm to 4mm.

3. Polyolefin foams with fine cells showing high rigidity as well as dimensional stability under heat according to Claims 1 and 2, **characterized in that** the polyethylenes are added in form of HDPR, LDPE, LLDPE and ULDPE types propylene homopolymers, and as copolymers composed of ethylene with α-olefins with 3 to 18 C atoms, or copolymers composed of ethylene, unsaturated esters and/or unsaturated carboxylic acids as well as mixtures of the said polyethylenes, and where the latter are in form of powders, granulates or coarse-grain materials, with grain sizes from 0.001mm to 7mm, preferably 0.05mm to 4mm.

4. Polyolefin foams with fine cells showing high rigidity as well as dimensional stability under heat according to Claims 1 to 3, **characterized in that** the bifunctional unsaturated ethylenic monomers are C4 - C10 dienes, C5 - C9 allyl compounds and/or C7 - C10 divinyl compounds, preferably butadiene, isoprene, dimethylbutadiene, allylacrylate and/or divinylbezene.

5. Polyolefin foams with fine cells showing high rigidity as well as dimensional stability under heat according to Claims 1 to 4, **characterized in that** the hydrolyzable unsaturated ethylenic silane compounds are vinylalkoxysilanes and/or methacrylic oxy alkylsilanes, preferably vinyltrimethoxysilane, vinyltriethoxysilane and/or methacrylic isopropyltrimethoxysilane.

6. Method for the manufacture of polyolefin foams with fine cells made of polypropylenes and polyethylenes, showing high rigidity as well as dimensional stability under heat, with foam densities ranging from 10 kg/m³ up to 600 kg/m³, **characterized in that** said polyolefin foams are manufactured from mixtures comprising by weight 10 per cent to 90 per cent - preferably 60 per cent to 80 per cent - polypropylenes and 90 per cent to 10 per cent - preferably 40 per cent to 20 per cent - polyethylenes, that are subjected to two reactive process stages and one foaming stage, where
(a) a pre-reaction occurs in the first reactive process stage, under which
a partial transformation takes place that involves either the powdered polypropylene/polyethylene mixture in solid phase in continuous screw mixers at a reaction temperature from 55°C to 105°C, comprising by weight 0.05 per cent to 2 per cent of bifunctional unsaturated ethylenic monomers and/or 0.1 per cent to 5 per cent of hydrolyzable unsaturated ethylenic organosilane compounds in the presence of 0.01 per cent to 0.85 per cent - always meant to refer to the polyolefins input - of thermally-degrading, radical-forming agents based on acylperoxides, alkylperoxides, hydroperoxides and/or peresters, having a half-time of 0.2 minutes to 5 minutes at reaction temperature; or the polypropylene/polyethylene mixture in a solid-phase-melt transition state in twinscrew extruders at a reaction temperature from 105°C to 190°C, comprising bifunctional unsaturated monomers and/or hydrolyzable unsaturated ethylenic organosilane compounds in the presence of 0.01 per cent to 0.85 per cent - always meant to refer to the polyolefins input - of thermally-degrading, radical-forming agents based on acylperoxides, alkylperoxides, hydroperoxides, peroxycarbonates, peresters, kentone peroxides, peroxyketals and/or azo compounds, having a half-time of 0.2 minutes to 2 minutes at reaction temperature;
and after which the reaction mixture contains by weight 5 per cent to 35 per cent of the unsaturated monomers input, and 10 per cent to 40 per cent of the thermally-degrading, radical-forming agents input, in unchanged form;
(b) in the second reactive process stage, which takes place in a twinscrew extruder, the non-transformed reactants contained in the reaction mixture undergo a coupling process by adjusting the temperature of the reaction mixture to be in the range from 195°C to 270°C, and adding by weight 0.3 per cent to 8 per cent of propellants and - If necessary - 0.01 per cent to 0.35 per cent of peroxides, always meant to refer to the polyolefins input; and
(c) the reaction mixture is discharged from the extruder and foamed in a well known manner, and drawn in form of semi-finished foam products such as films, pipes or sections, or discharged in form of a foamed billet that is immediately cut into particle-foam segments;
and where before, or during the first and/or the second reactive process stage, if needed, by weight 0.01 per cent to 1 per cent of nucleating agents, 0.01 per cent to 2.5 per cent of stabilizers, 0.1 per cent to 1 per cent of antistatic additive agents, 0.2 per cent to 3 per cent of pigments, 5 per cent to 40 per cent of filling and/or reinforcing agents, 2 per cent to 20 per cent of flameproofing agents, 0.01 per cent to 5 per cent of silanol condensation catalysts and/or 0.01 per cent to 5 per cent of processing aid additives are added, always meant to refer to the mixture of polypropylene and polyethylene input.

7. Method for the manufacture of polyolefin foams with fine cells according to Claim 6, **characterized in that** the propellants are gas-developing agents, volatile hydrocarbons, volatile halogenated hydrocarbons and/or gases.

8. Application of polyolefin foams with fine cells showing high rigidity as well as dimensional stability under heat according to one or more of Claims 1 to 5 in the packaging sector, preferably for wrapping food, motorcar external parts and motorcar interior parts as well as component parts for electric and electric devices.

## Revendications

1. Mousses de polyoléfines à cellules fines de hautes stabilité dimensionnelle à chaud et rigidité avec des densités de mousse du domaine de 10 à 600 kg/m³ en polypropylènes et polyéthylènes, **caractérisées par le fait que** la production de mousses de polyoléfines a lieu sous l'emploi de mélanges de 10 à 90% en poids, de préférence de 60 à 80 % en poids, de polypropylènes et de 90 à 10 % en poids, de préférence de 40 à 20 % en poids de polyéthylènes en deux étages réactifs de processus et en un étage de moussage, vu que
a) dans le premier étage réactif de processus une préréaction s'est produite dans laquelle
ou bien le mélange pulvérulent de polypropylène et polyéthylène a été partiellement transformé dans la phase solide par des températures de 55 jusqu'à 105°C dans des mélangeurs à vis continus avec 0,05 jusqu'à 2 % en poids de monomères éthyléniques bifonctionnels insaturés et/ou avec 0,1 jusqu'à 5 % en poids de composés d'organosilane éthyléniques hydrolysables insaturés en présence de 0,01 jusqu'à 0,85 % en poids, toujours en rapport avec la polyoléfine utilisée, de formateurs de radicaux se décomposant thermiquement à base de peroxydes d'acyle, de péroxydes d'alkyle, d'hydroperoxydes et/ou de peresters, qui possèdent une demi-vie de 0,2 à 5 mn sous la température de réaction,
ou bien le mélange de polypropylène et de polyéthylène dans une phase de transition entre phase solide/fonte a été partiellement transformé par des températures de réaction de 105 à 190 °C dans des boudineuses à double vis avec 0,05 jusqu'à 2 % en poids de monomères éthyléniques bifonctionnels insaturés et/ou de 0,1 à 5 % en poids de composés d'organosilane éthyléniques hydrolysables insaturés en présence de 0,01 a 0,85 % en poids, toujours en rapport avec la polyoléfine utilisée, de formateurs de radicaux se décomposant thermiquement à base de peroxydes d'acyle, de péroxydes d'alkyle, d'hydroperoxydes, de peroxycarbonates, de peresters, de peroxydes de cétone, de peroxycétales et / ou de composés azoïques qui possèdent une demi-vie de 0,2 à 2 mn sous la température de réaction,
et qui après laquelle contiennent dans le mélange de réaction de 5 à 35 % en poids des monomères éthyléniques bifonctionnels insaturés et/ou des composés d'organosilane éthyléniques hydrolysables insaturés et de 10 à 40 % en poids des formateurs de radicaux utilisés se décomposant thermiquement, restés inchangés,
b) que dans la deuxième étape réactive dans une boudineuse à double vis en ajustant une température de réaction du mélange de réaction dans le domaine de 195 à 270°C sous addition de 0,3 à 8 % en masse de gonflants et le cas échéant de 0,01 à 0,35 % en poids, toujours en rapport avec les polyoléfines utilisées, de peroxydes, une liaison des réactants non transformés se produit dans le mélange de réaction, et
c) que le mélange de réaction est extrait de la boudineuse de la manière bien connue par moussage pour être tiré comme demi-produit sous forme de feuilles, de tubes ou de profilés ou être déchargé sous forme de brin moussé et coupé immédiatement en segments en particules moussées.
et vu que avant ou pendant le premier et/ ou le deuxième étage réactif de processus furent ajoutés, toujours par rapport au mélange utilisé de polypropylène et de polyéthylène, le cas échéant de 0,01 à 1 % en poids d'agents nucléants, de 0,01 à 2,5 % en poids de stabilisants, de 0,1 à 1 % en poids d'antistatiques, de 0,2 à 3 % en poids de pigments, de 5 à 40 % en poids de matières de charge et/ ou de charge active, de 2 à 20 % en poids d'ignifugeants, de 0,1 à 5 % en poids de catalyseurs de condensation au silanol et/ou de 0,01 à 5 % en poids d'auxiliaires de transformation.

2. Mousses de polyoléfines à cellules fines de hautes stabilité dimensionnelle à chaud et rigidité selon la revendication 1, **caractérisées par le fait que** sont utilisés comme polypropylènes des homopolymères de propylène et /ou des copolymères de propylène avec des oléfines α avec 2 jusqu'à 18 atomes de C ainsi que des mélanges des polypropylènes cités, les polypropylènes étant présentés en poudres, granulés ou particules grenues avec une granulométrie située entre 0,001 et 7 mm, de préférence entre 0,05 et 4 mm.

3. Mousses de polyoléfines à cellules fines de hautes stabilité dimensionnelle à chaud et rigidité selon les revendications 1 et 2, **caractérisées par le fait que** sont utilisés comme polyéthylènes des types HDPE, LDPE, LLDPE et ULDPE ainsi que des copolymères d'éthylène avec des oléfines α avec 3 jusqu'à 18 atomes de C ou des copolymères d'éthylène, des esters insaturés et/ ou des acides carboxyliques insaturés ainsi que des mélanges des polyéthylènes cités, les polyéthylènes étant présentés en poudres, granulés ou particules grenues avec une granulométrie située entre 0,001 et 7 mm, de préférence entre 0,05 et 4 mm.

4. Mousses de polyoléfines à cellules fines de hautes stabilité dimensionnelle à chaud et rigidité selon les revendications de 1 jusqu'à 3, **caractérisées par le fait que** les monomères éthyléniques bifonctionnels insaturés sont des diènes de C₄ jusqu'à C₁₀, des composés allyliques de C₅ jusqu'à C₉, et/ ou des composés divinyliques de C₇ jusqu'à C₁₀, de préférence du butadiène, isoprène, diméthylbutadiène, acrylate allylique et/ ou du divinylbenzène.

5. Mousses de polyoléfines à cellules fines de hautes stabilité dimensionnelle à chaud et rigidité selon les revendications de 1 jusqu'à 4, **caractérisées par le fait que** les composés de silane éthyléniques hydrolysables insaturés sont du vinylalkoxysilane et/ou méthacryloxyalkylsilane, de préférence du vinyltriméthoxysilane, du vinyltriéthoxysilane et/ ou du méthacrylisopropyltriméthoxylane.

6. Procédé de production de mousses de polyoléfines de hautes stabilité dimensionnelle et rigidité avec des densités de mousse du domaine de 10 jusqu'à 600 kg/m³ en polypropylènes et polyéthylènes, **caractérisé par le fait que** la production des mousses de polyoléfine a lieu par l'emploi de mélanges de 10 à 90 % en poids, de préférence de 60 à 80 % en poids, de polypropylènes et de 90 à 10 % en poids, de préférence de 40 à 20 % en poids de polyéthylènes en deux étages réactifs de processus et en un étage de moussage, vu que
a) dans le premier étage réactif de processus une préréaction se produit, dans laquelle
ou bien le mélange pulvérulent de polypropylène et polyéthylène a été partiellement transformé dans la phase solide par des températures de réaction de 55 jusqu'à 105°C dans des mélangeurs à vis continus avec 0,05 jusqu'à 2 % en poids de monomères bifonctionnels insaturés et/ou avec 0,1 jusqu'à 5 % en poids de composés d'organosilane éthyléniques hydrolysables insaturés en présence de 0,01 jusqu'à 0,85 % en poids, toujours en rapport avec la polyoléfine utilisée, de formateurs de radicaux se décomposant thermiquement à base de peroxydes d'acyle, de péroxydes d'alkyle, d'hydroperoxydes et/ou de peresters, qui possèdent une demi-vie de 0,2 à 5 mn sous la température de réaction,
ou bien le mélange de polypropylène et de polyéthylène dans une phase de transition entre phase solide/fonte a été partiellement transformé par des températures de réaction de 105 à 190 °C dans des boudineuses à double vis avec des monomères bifonctionnels insaturés et/ ou des composés d'organosilane éthyléniques hydrolysables insaturés en présence de 0,01 a 0,85 % en poids, toujours en rapport avec la polyoléfine utilisée, de formateurs de radicaux se décomposant thermiquement à base de peroxydes d'acyle, de péroxydes d'alkyle, d'hydroperoxydes, de peroxycarbonates, de peresters, de peroxydes de cétone, de peroxycétales et / ou de composés azoïques qui possèdent une demi-vie de 0,2 à 2 mn sous la température de réaction,
et qui après laquelle contiennent dans le mélange de réaction de 5 à 35 % en poids des monomères éthyléniques insaturés et de 10 à 40 % en poids des formateurs de radicaux utilisés se décomposant thermiquement, restés inchangés,
b) que dans la deuxième étape réactive dans une boudineuse à double vis en ajustant une température de réaction du mélange de réaction dans le domaine de
195 à 270°C sous addition de 0,3 à 8 % en poids de gonflants et le cas échéant de 0,01 à 0,35 % en poids, toujours en rapport avec les polyoléfines utilisées, de peroxydes, une liaison des réactants non transformés se produit dans le mélange de réaction, et
c) que le mélange de réaction est extrait de la boudineuse de la manière bien connue par moussage pour être tiré comme demi-produit sous forme de feuilles, de tubes ou de profilés ou être déchargé sous forme de brin moussé et coupé immédiatement en segments en particules moussées.
et vu que avant et pendant le premier et/ ou le deuxième étage réactif de processus furent ajoutés, toujours par rapport au mélange utilisé de polypropylène et de polyéthylène, le cas échéant de 0,01 à 1 % d'agents nucléants, de 0,01 à 2,5 % en poids de stabilisants, de 0,1 à 1 % en poids d'antistatiques, de 0,2 à 3 % en poids de pigments, de 5 à 40 % en poids de matières de charge et/ ou de charge active, de 2 à 20 % en poids d'ignifugeants, de 0,1 à 5 % en poids de catalyseurs de condensation au silanol et/ou de 0,01 à 5 % en poids d'auxiliaires de transformation.

7. Procédé de production de mousses de polyoléfines à cellules fines selon la revendication 6, **caractérisé par le fait que** sont utilisés comme gonflants des gonflants de séparation gazeuse, des hydrocarbures volatiles, des hydrocarbures halogénés volatiles et/ ou des gaz.

8. Utilisation de mousses de polyoléfines à cellules fines de hautes stabilité dimensionnelle à chaud et rigidité selon une ou plusieurs des revendications de 1 jusqu'à 5, dans le secteur de l'emballage, de préférence pour l'emballage de denrées alimentaires, pour les pièces extérieures et les pièces intérieures de véhicules automobiles ainsi que pour les éléments préfabriqués d'appareils électriques et électroniques.
